# FASCICULE DE BREVET EUROPEEN

(11) **EP 2 411 863 B1**
(45) Date de publication et mention de la délivrance du brevet: **25.06.2014**
(21) Numéro de dépôt: 10715971.7
(22) Date de dépôt: 24.03.2010
(51) Int. Cl.: G02F 1/025

(54) **Modulateur optique à haut débit en semi-conducteur sur isolant**
Aus Silizium auf einem Isolator bestehender optischer Breitbandmodulator
Semiconductor-on-insulator broadband optical modulator

(30) Priorité: 24.03.2009 FR 0951865
(43) Date de publication de la demande: 01.02.2012
(73) Titulaire: UNIVERSITE PARIS-SUD 11, 91400 Orsay (FR); Centre National de la Recherche Scientifique (CNRS), 75016 Paris (FR)
(72) Inventeur: MORINI, Delphine, F-92120 Montrouge (FR); RASIGADE, Gilles, F-75012 Paris (FR); VIVIEN, Laurent, F-91430 Vauhallan (FR)
(74) Mandataire: Pontet Allano & Associes
(86) Numéro de dépôt international: PCT/FR2010/050531
(87) Numéro de publication internationale: WO 2010/109134

(56) Documents cités:
- EP-A- 0 285 206
- WO-A-2005/093480
- US-A1- 2002 071 621
- MAINE S ET AL: "Design Optimization of a SiGe/Si Quantum-Well Optical Modulator" JOURNAL OF LIGHTWAVE TECHNOLOGY, IEEE SERVICE CENTER, NEW YORK, NY, US, vol. 26, no. 6, 15 mars 2008 (2008-03-15), pages 678-684, XP011207194 ISSN: 0733-8724
- JALALI B ET AL: "3D integration of sub-surface photonics with CMOS" PROCEEDINGS OF THE SPIE - THE INTERNATIONAL SOCIETY FOR OPTICAL ENGINEERING SPIE - THE INTERNATIONAL SOCIETY FOR OPTICAL ENGINEERING USA, vol. 6124, no. 1, 9 février 2006 (2006-02-09), pages 61240U-1, XP002547800 ISSN: 0277-786X

## Description

L'invention concerne un composant de modulation électro-optique amélioré pour de meilleures performances dans les débits supérieurs à 10 Gb/s tel que défini dans la revendication indépendante 1.

L'invention concerne en outre un procédé de fabrication d'un tel composant, ainsi qu'un dispositif incluant un tel composant.

### Domaine technique

L'invention se situe dans le domaine de l'optoélectronique et la photonique sur semiconducteur, en particulier pour des applications dans les domaines des télécommunications optiques et des interconnexions optiques dans les circuits intégrés.

Pour réaliser une chaîne de communication comportant à la fois des signaux électriques et des signaux basés sur de la lumière dans des fibres optiques ou des circuits optiques, des composants de conversion électronique/ optique sont nécessaires.

Le modulateur électro-optique est un élément permettant de transférer une information depuis un signal électrique vers une onde optique, par exemple pour transformer une information numérique sous forme électronique en un signal numérique optique qui sera envoyé dans une fibre optique pour une transmission longue distance

### Etat de la technique

La génération actuelle de composants et systèmes optoélectroniques commercialisés ou en cours d'industrialisation fonctionne à un débit allant jusqu'à 10 gigabits par seconde par canal chromatique pour le silicium.

La prochaine génération actuellement à l'étude devrait fonctionner à des débits plus importants et supérieurs à 10 Gbit/s, pour des applications typiques nécessitant de 10 à 40 Gbit/s.

Un but de l'invention est ainsi d'améliorer les performances fournies par ces composants, en particulier sur le plan de la vitesse de modulation et du contraste obtenu dans le signal optique modulé, mais aussi de la diminution des pertes optiques.

### Augmentation du débit

Il existe des modulateurs optiques fonctionnant à plus de 10 et jusqu'à 40 Gbit/s, qui sont réalisés en matériaux semiconducteurs de type III-V et en Niobate de lithium (LiNbO3).

Cependant, ces composants ne présentent pas les avantages des modulateurs en silicium par rapport aux autres technologies, c'est-à-dire en particulier et par exemple : possibilités et simplicité d'intégration de l'optique et de l'électronique sur le même substrat, utilisation des moyens de fabrication existants de la microélectronique, moindre coût et souplesse et rapidité de contrôle et de mise au point.

Un but de l'invention est ainsi en particulier de résoudre ou de limiter les problèmes liés à l'augmentation du débit des modulateurs électro-optiques réalisés en semiconducteur sur isolant, et plus particulièrement en silicium sur isolant.

### Modulateurs en silicium

Dans un modulateur en silicium sur isolant, la modulation optique est généralement réalisée par variation de la densité de porteurs (électrons et/ou trous) à l'intérieur du guide d'onde optique. Cette variation de densité de porteurs crée une variation de l'indice de réfraction, et donc une variation de la phase de l'onde optique guidée en fonction d'une tension appliquée à partir d'un signal électrique d'entrée.

Une structure interférométrique est utilisée pour convertir la modulation de phase en modulation d'intensité optique, qui peut être par exemple un résonateur de type Fabry Pérot ou en anneau ou un interféromètre de Mach Zehnder.

L'interféromètre de Mach Zehnder est formé d'un diviseur de faisceau vers deux bras dans lesquels se propagent les deux ondes, et dans le/lesquels la modulation de phase est réalisée, et d'un combineur des faisceaux sortant de ces deux bras. Quand les deux ondes se recombinent en phase, l'intensité est maximale en sortie de l'interféromètre, quand les deux ondes se recombinent en opposition de phase, l'intensité est minimale.

Au vu des variations d'indice effectif qui peuvent être obtenues (typiquement inférieures à 10⁻³), les régions actives placées dans les bras des Mach Zehnder ont une longueur de plusieurs millimètres afin de pouvoir obtenir une variation de phase égale à pi, et fournir ainsi de bonnes performances par exemple en matière de contraste.

Il est fait référence en détail plus loin aux documents suivants, qui décrivent des modulateurs optiques sur substrat de type silicium sur isolant :
- publication S. Maine et al., "Design Optimization of a SiGe/Si Quantum-Well Optical Modulator, J. Lightwave Technology, vol.26, no.6, pp. 678-684, se rapportant aux caractéristiques du préambule de la revendication 1,
- document US 7,251,408,
- document WO 2005/093480, et
- publication D. MARRIS-MORINI et al, "Low loss and high speed silicon optical modulator based on a lateral carrier depletion structure", Optics express, 16, 1, 334-339 (2008).

Il existe plusieurs publications portant sur des modulateurs optiques sur substrat de type silicium sur isolant, fonctionnant à des débits supérieurs à 10 Gbit/s. Cependant, les moyens utilisés pour atteindre ces débits, par exemple pour une réduction de la longueur de la région active, entraînent des performances limitées de ces composants.

Ainsi, la publication L. Liao et al, "40 Gbit/s silicon optical modulator for highspeed applications", Electronics Letters, 43, (22) (2007) propose un modulateur fournissant une modulation avec un contraste de seulement 1dB à 40 Gbit/s.

De son côté, la publication S. Manipatrun et al, "High Speed Carrier Injection 18 Gb/s Silicon Micro-ring Electro-optic Modulator", LEOS 2007, 21-25 Oct. 2007 propose un modulateur basé sur un résonateur en anneau fournissant une modulation avec un contraste de seulement 3 dB de modulation à 18Gbit/s. En outre, le modulateur à anneau présente des inconvénients car il est par exemple plus sensible à la température et aux imperfections technologiques, et nécessite une alimentation électrique particulièrement complexe.

Un autre but de l'invention est ainsi de pallier les inconvénients de l'état de la technique, et en particulier de :
- permettre d'augmenter la vitesse de modulation,
- améliorer les performances de contrastes lors d'une augmentation des débits,
- permettre d'améliorer le rapport signal bruit du signal modulé
- limiter les pertes optiques,
- faciliter et simplifier la mise au point, l'industrialisation, la fabrication des composants ou des systèmes correspondant,
- améliorer et simplifier l'intégration de la fonction de modulation au sein de circuits compacts et/ou complexes et/ou hybrides, en deux dimensions et en trois dimensions,
- permettre l'utilisation de tout ou partie des procédés et des installations existant,
- permettre une amélioration des capacités de transmission dans les circuits optoélectronique y compris les lignes de transmission optique
- rendre ces améliorations utilisables dans des circuits complexes, compacts, et/ou hybrides, en particulier avec intégration 3D.

### Exposé de l'invention

L'invention propose pour cela un composant optoélectronique amélioré pour commander un signal optique circulant dans un micro guide d'onde formé à l'aide d'un relief, typiquement une nervure en relief (aussi appelée arête) dépassant de la surface d'une couche de semi-conducteur au sein d'un substrat de type semi-conducteur sur isolant.

Typiquement, le semiconducteur peut être du silicium sur une couche de silice, par exemple sous la forme d'une galette (« wafer ») de type SOI (« Silicon On Isolant ») fournie par exemple par la société SOITec.

L'invention peut toutefois aussi s'appliquer à un modulateur utilisant d'autres semiconducteurs tels que par exemple :
- du germanium (soit : germanium sur isolant), ou
- tout semiconducteur de type III-V (soit : III-V sur isolant).

Elle peut aussi s'appliquer à un substrat de structure plus complexe, telle que :
- semiconducteur III-V sur SOI (silicium sur isolant), ou
- semiconducteur III-V sur GOI (germanium sur isolant), ou
- hétéro structure de type SiGe sur Si, ou de type SiGe sur Ge.

Selon l'invention :
- ce micro-guide d'onde comprend une zone active centrée sur le mode optique créé par ladite arête/nervure et située entre (et possiblement incluse dans) une zone dopée de type P et une zone dopée de type N, dites zones dopées principales, formant entre elles une diode, et
- ces zones dopées P ou N sont reliées à deux électrodes disposées de part et d'autre de cette zone active et permettent de polariser ladite diode.

L'invention propose d'augmenter la fréquence de coupure d'un tel composant en modifiant certains des paramètres électriques qui y concourent, et ce de façon inattendue pour l'homme du métier.

Selon l'invention telle que définie dans la revendication 1, cette fréquence de coupure est augmentée en contrôlant l'épaisseur de la couche d'isolant du substrat SOI et/ou la résistivité des couches en semi-conducteur du substrat SOI. Dans un mode de réalisation, on diminue en outre les résistances d'accès du composant en lui-même.

En effet, les inventeurs se sont rendu compte que les valeurs élevées de fréquences nécessaires pour obtenir les niveaux de débits recherchés rendent non négligeables ces facteurs et cette influence, voire prépondérants par rapport aux autres facteurs précédemment gérés.

### Résistances d'accès du composant

Dans un mode de réalisation, l'invention propose de diminuer les résistances d'accès d'un composant tel que défini dans la revendication 1, c'est-à-dire la résistance électrique entre les électrodes (par exemple en métal) de la diode et la région active (les régions dopées de type N et P au sein de la diode, ainsi que la ou les éventuelles régions intrinsèques). La diminution de ces résistances d'accès permet de limiter l'influence néfaste exercée par le comportement capacitif de la diode en elle-même.

Habituellement, par exemple dans le document US 7,251,408, les moyens utilisés pour diminuer les résistances d'accès d'une diode consistent à augmenter le dopage des régions P et N de la diode. Dans le cas d'un modulateur cependant, il a été constaté que cette méthode avait comme conséquence une augmentation des pertes optiques du composant.

Contrairement à ce qui se ferait naturellement dans l'état de la technique, l'invention propose un composant tel que défini dans la revendication 1 et dans lequel au moins une de ces zones dopées principales (et de préférence les deux) présente une augmentation de la dimension transversale au courant circulant entre la zone active et l'électrode d'accès correspondante. Cette augmentation de la dimension transversale au courant diminue la valeur globale de la résistance d'accès pour cette électrode.

Dans le document WO 2005/093480, la figure 1 décrit un modulateur optique constitué par une diode dite verticale, formée entre une couche dopée Si P⁺ au fond d'une cuvette du substrat de silicium et une couche dopée Si N- portant l'arête et se prolongeant sur le dessus du composant jusqu'à une électrode. Cette couche Si N- présente une partie remontant perpendiculairement au plan du substrat, mais dont la dimension transversale au courant (c'est à dire la dimension parallèle au plan du substrat) est sensiblement identique à la dimension transversale des autres parties de cette couche Si N⁻.

De façon différente, la caractéristique proposée par l'invention est avantageusement mise en oeuvre selon une dimension transversale à la direction de circulation de ce courant, y compris dans des configurations où cette direction n'est pas parallèle au plan du substrat.

Selon l'invention, cette dimension transversale est obtenue par une augmentation de la dimension horizontale de la partie de la zone dopée principale reliée à son électrode par rapport à sa partie la plus proche de la zone active en combinaison avec une surépaisseur d'au moins une des zones dopées principales dans sa partie reliée à son électrode par rapport à sa partie la plus proche de la zone active, déterminée à partir de la géométrie et des proportions de ces différentes parties.

L'invention décrit ainsi une manière originale de diminuer les résistances d'accès d'un composant tel que défini dans la revendication 1 en augmentant la dimension transversale au courant des régions de silicium dopées, en particulier dans le cas où une diode latérale est utilisée mais aussi pour d'autres configurations telles qu'une diode dite verticale par exemple. Cette augmentation est effectuée seulement à partir d'une distance minimale du coeur du guide pour ne pas trop influencer la propagation du mode optique et donc conserver de faibles pertes de propagation.

Cette distance minimale dépend des dimensions effectives de la zone contenant le mode optique, et donc des paramètres de confinement du guide optique et de son environnement.

Elle peut être déterminée par des essais ou des mesures portant sur les objectifs recherchés lors de la conception du composant, en particulier concernant les critères suivants :
- pertes de puissance dans le guide ou
- intensité du champ électromagnétique maximale dans la diode par mètre linéaire.

Un écart plus grand entre le mode optique et la remontée de la zone ayant une dimension transversale augmentée donnera de moins grandes pertes, tout en diminuant les performances en contraste du modulateur. Cette distance minimale correspondra donc à un écart choisi avec la plus faible valeur possible pour laquelle les pertes restent acceptables par rapport au cahier des charges.

Ainsi, l'augmentation de la dimension transversale des zones dopées pourra être située au moins à une distance du coeur du guide à laquelle l'intensité du champ est inférieure à un dixième de l'intensité maximale du champ, c'est à dire au moins à une distance pour laquelle on I<Imax/10. De préférence on choisira une distance telle que I<Imax/100, voire même I<Imax/1000.

Il est à noter que cette augmentation représente une complexité, des contraintes et/ou un coût supplémentaires pour la compacité et l'intégration, qui constitueraient normalement une incitation à éviter ce type de solution.

Le document US 7,251,408 divulgue d'ailleurs un composant illustrant cette tendance contre-incitative, dans lequel les parties dopées de la région active sont gravées en surface pour accueillir des électrodes sous la forme d'implants intégrés dans la partie dopée. Ces implants sont intégrés de façon à ne pas dépasser la surface du silicium de la couche guide d'onde, ni au niveau de l'arête de guide d'onde ni même autour de cette arête.

### Influence de l'environnement capacitif

L'invention telle que définie dans la revendication 1 propose de diminuer l'influence de la capacité équivalente (au sens de la capacité d'un condensateur) formée par l'environnement immédiat de la région active du composant. Elle propose de diminuer cette influence en diminuant la valeur de cette capacité, ou en augmentant la résistance du substrat, et de préférence en combinant ces deux aspects.

Selon l'invention, un tel composant est réalisé au sein d'un substrat choisi ou modifié pour diminuer l'influence de l'effet capacitif formé autour de la diode, et en particulier entre d'une part les zones dopées principales et d'autre part la couche de substrat située de l'autre côté de la couche d'isolant et en particulier en dessous de celle-ci, en contrôlant l'épaisseur de la couche d'isolant et/ou la résistivité des couches de substrat, éventuellement en combinaison avec ladite diminution de la résistance d'accès.

### Remarque concernant l'état de la technique :

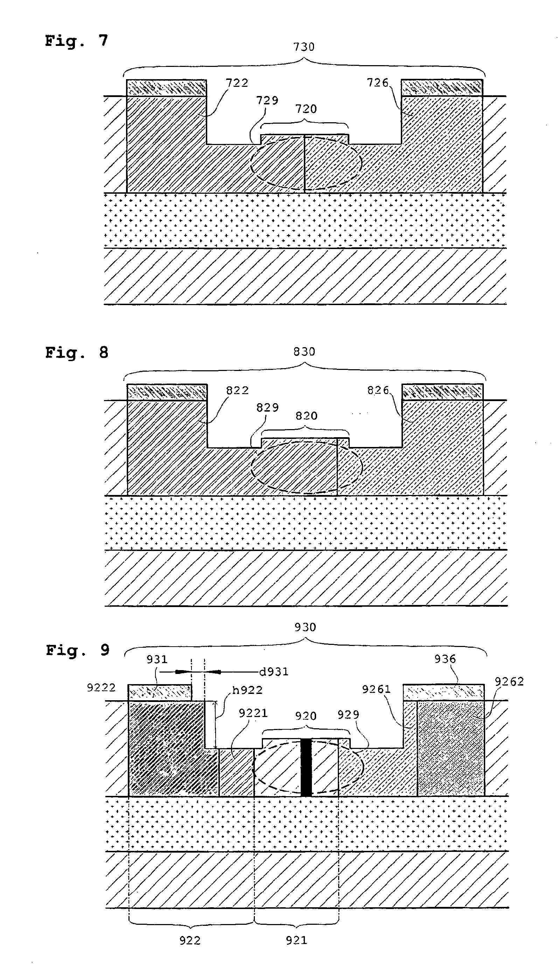

Dans un document (US 2002/071621) portant sur un modulateur d'un type différent, avec deux diodes verticales reliées entre elles reposant directement et sans isolant sur un substrat semiconducteur, il est décrit une rainure (74, figure 8) traversant l'une des couches dopées pour entamer le substrat semiconducteur. Ce modulateur optique est formé par deux diodes verticales (20 et 26) à base de InP. Ces diodes sont reliées en série par une couche commune (14) de InP dopé N, qui est déposée directement sur un substrat semiconducteur (12) en InP+Fe. L'ensemble est recouvert d'une couche isolante (36a, 36c).

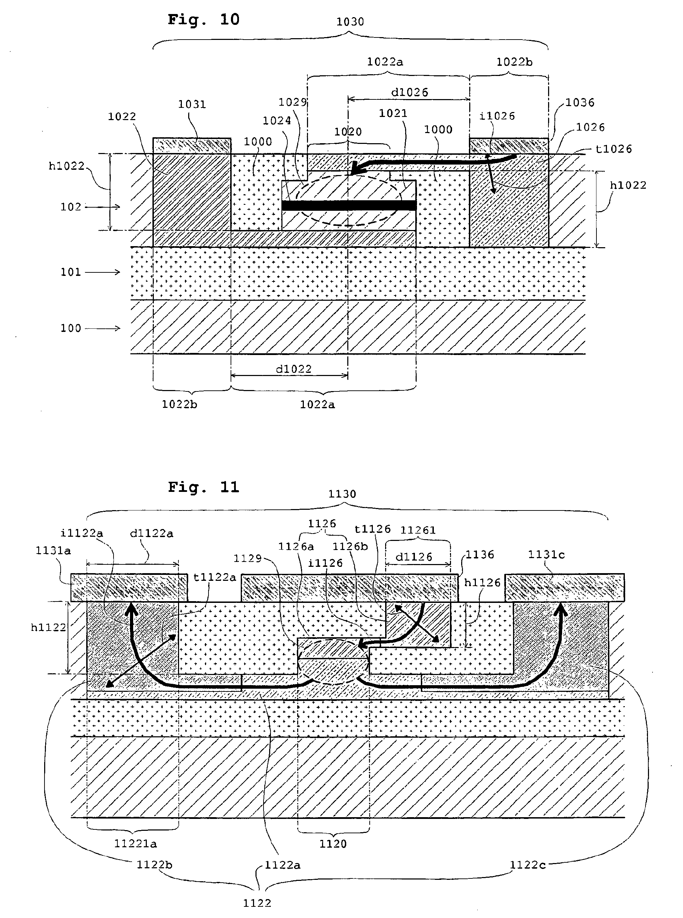

Cette rainure (74) est parallèle et extérieure aux diodes et permet (§[106]) d'interrompre la couche dopée (14), pour isoler la partie dopée extérieure (14p) du reste de la couche dopée (14) situé entre les deux diodes. Cette interruption permet de découpler leurs potentiels respectifs, et ainsi de diminuer la capacité (cj1 et cj2, figure 11) de ces deux diodes (20 et 26).

En effet, l'enseignement de ce document vise à diminuer la capacité statique du modulateur (§[011] dernière phrase), c'est à dire sa capacité interne en tant que composant au sein d'un circuit électronique (cf. figure 11).

Dans cette divulgation, on remarque que la présence de cette rainure (74) a aussi pour conséquence de créer un effet capacitif supplémentaire entre la couche dopée extérieure (14p) et le reste de la couche dopée (14) active situé dans le composant. Cette rainure a donc aussi pour effet d'augmenter la capacité existant entre le composant lui-même et son environnement extérieur (entre autres la couche 14p).

A la différence de l'invention, cette rainure ne constitue donc pas une modification susceptible de diminuer l'influence capacitive de l'environnement. Ce document décrit un composant formé directement sur un substrat semiconducteur, sans couche d'isolant entre les deux. Donc, a *fortiori,* il ne divulgue pas une modification susceptible de diminuer l'effet capacitif formé entre les zones principales dopées et une couche de substrat située de l'autre côté d'une couche d'isolant.

L'enseignement de ce document est donc notablement différent des caractéristiques proposées par l'invention, dans laquelle des modifications du substrat sont proposées de façon à diminuer l'influence capacitive de l'environnement, c'est à dire de façon à diminuer la capacité entre le composant et l'extérieur.

Ainsi, on remarque que le but recherché par ce document est différent des objectifs de l'invention, et que l'effet obtenu par l'enseignement de ce document va à l'encontre des objectifs de l'invention.

Plus particulièrement, l'invention propose différentes possibilités pouvant être combinables entre elles de différentes façons :

### Augmentation de la résistance du substrat

Selon une première possibilité, l'invention selon la revendication 1 définit un composant selon lequel le semiconducteur du substrat situé sous l'isolant est choisi ou modifié pour présenter une résistance forte ou plus forte.

Cette augmentation de résistance est obtenue en particulier selon les méthodes suivantes, pouvant être combinées entre elles :
- en supprimant ou en amincissant le semiconducteur du substrat situé sous l'isolant, dans tout ou partie de la zone située à l'aplomb des zones dopées ou intrinsèque(s) formant la diode.
- en choisissant ou en modifiant le semiconducteur pour qu'il présente une résistivité supérieure à 100 ohms.cm, uniformément ou en tout ou partie de la zone située à l'aplomb de la diode.

Les substrats silicium standards non intentionnellement dopés présentent en général un taux de dopage résiduel de l'ordre d'environ 10¹⁵cm⁻³, ce qui leur donne une résistivité située aux alentours de 10 à 20 Ωcm (ohm centimètre).

Dans le cas du silicium, l'invention propose d'utiliser, au moins pour cette partie du substrat, un silicium présentant une résistivité d'au moins 100 à 200 Ωcm, voire supérieure à 500 Ωcm. Ainsi, de bons résultats sont prévus avec un substrat haute résistivité présentant une valeur de l'ordre de 750 Ωcm. Jusqu'à présent, cette caractéristique n'était pas identifiée comme significative pour les objectifs visés ici. De telles caractéristiques de substrat étaient connues en elles-mêmes, mais n'étaient ainsi pas recherchées spécifiquement pour la présente application.

L'invention propose ainsi de sélectionner ce substrat spécifiquement pour qu'il présente une telle résistivité. La revendication 1 propose, alternativement ou en combinaison, de réaliser la couche située sur l'isolant à partir d'un semi-conducteur ayant une résistivité supérieure à 100 ohms.cm.

Alternativement ou en combinaison, l'invention propose aussi de réaliser une ou plusieurs étapes d'augmentation de cette résistivité, par exemple une purification, si possible au dessus des valeurs citées ci-dessus mais non obligatoirement.

### Augmentation de l'isolation

Selon une deuxième possibilité pouvant être avantageusement combinée avec la première, la couche d'isolant est choisie ou modifiée pour présenter une plus grande épaisseur que ce qui était jugé suffisant jusqu'à présent. Cette épaisseur est d'au moins 2 micromètres et de préférence au moins 3 micromètres, voire plus de 4 micromètres.

De telles épaisseurs sont actuellement réalisables dans le domaine des substrats de type SOI, mais pour des utilisations différentes et à des coûts plus importants qui dissuadaient jusqu'à présent de les rechercher spécifiquement faute d'avantages constatés. C'est pourquoi les substrats utilisés sont actuellement d'une épaisseur variable voire aléatoire en fonction des disponibilités. Cette épaisseur était jusqu'à présent considérée comme suffisante pour éviter les fuites de lumière à partir d'environ 1 micromètre d'isolant pour les applications actuelles d'optique. Les épaisseurs les plus couramment utilisées sont ainsi comprises en 1 et 2 micromètre.

Selon une troisième possibilité de l'invention définie dans la revendication 1, l'isolant est aminci ou retiré, partiellement ou totalement, dans au moins une partie de la zone située à l'aplomb des zones dopées ou intrinsèque formant la diode.

### Couches au dessus

Il est à noter que ces différentes possibilités de traitement du substrat selon l'invention peuvent aussi être appliquées à tout ou partie des couches qui viennent recouvrir la région active, par exemple par dépôt ultérieur ou bien après assemblage avec un autre circuit ou substrat comme dans le cas d'un procédé du type à « intégration 3D ».

Une intégration « trois dimensions » consiste à combiner différents types de composants fonctionnels dans un même composant matériel ou un même circuit intégré, en réalisant leurs parties constitutives sur différents niveaux pouvant possiblement communiquer entre eux.

Une telle intégration peut comprendre la réalisation d'un premier composant fonctionnel sur un substrat, puis la réalisation de nouvelles couches sur ce premier composant pour réaliser un deuxième composant fonctionnel.

Une autre méthode comprend la réalisation de deux composants ou groupes de composants sur deux substrats différents, puis l'assemblage tête bêche de l'un sur l'autre par leur surface supérieure.

Les différentes caractéristiques de l'invention ici exposées peuvent être appliquées avantageusement à la conception d'un ou plusieurs composants ainsi assemblés.

Dans l'esprit de l'invention, les caractéristiques exposées comme s'appliquant à l'environnement de la diode (traitement de l'isolant et/ou du substrat) s'étendent également aux couches ou régions qui rentrent dans cet environnement y compris après un tel assemblage.

Les couches d'isolant ou de substrat situées « au dessus » (par rapport au substrat initial du composant) sont elles aussi avantageusement traitées comme décrit ci-dessus : c'est-à-dire par augmentation de la résistivité voire suppression partielle ou complète pour le substrat, et/ou par augmentation de l'épaisseur voire suppression partielle ou totale pour l'isolant.

### Performances

L'invention offre ainsi des solutions permettant d'atteindre des débits supérieurs à 10 Gbit/s, tout en ayant de « bonnes » propriétés de modulation, et en particulier un fort contraste entre les niveaux haut et bas en sortie du modulateur ainsi que de faibles pertes optiques.

A titre de comparaison, les inventeurs ont obtenu des résultats de simulation numérique conduisant à prévoir un contraste d'au moins 5 dB, voire 10 dB ou plus, à une fréquence correspondant à un débit de 40 Gb/s avec un interféromètre Mach-Zehnder, soit un facteur cinq voire dix (en décibels) par rapport au contraste de 1 dB énoncé dans la publication L. Liao et al.

Les inventeurs ont ainsi constaté qu'il était important de concevoir des électrodes, permettant une propagation correcte de l'onde hyperfréquence avec une faible atténuation tout le long du dispositif.

En effet, aux fréquences et débits considérés (plus de 10 Gbit/s), la tension électrique n'est pas appliquée simultanément sur l'ensemble du composant : il s'agit en fait d'une onde hyperfréquence dont la longueur d'onde est de l'ordre de grandeur de la longueur du dispositif.

De préférence, les deux zones dopées principales présentent une surépaisseur dans leur partie reliée à leur électrode respective par rapport à sa partie la plus proche de la zone active, cette surépaisseur étant recouverte en tout ou partie d'une couche formant la partie inférieure de ladite électrode ou en contact avec elle.

Selon une particularité, ces électrodes peuvent ainsi être coplanaires avec, et par exemple déposées sur, la surface du composant. Elles permettent ainsi une faible atténuation tout le long du guide d'onde linéaire.

Dans le cas d'une diode horizontale, ces surépaisseurs peuvent par exemple être réalisées simplement par une gravure située de part et d'autre du mode optique. Les bords de cette gravure forment alors d'une part les côtés de la nervure de guidage, et d'autre part les remontées des surépaisseurs des zones dopées principales.

L'ensemble de ces caractéristiques s'applique à de nombreuses configurations, et en particulier aux configurations suivantes dans lesquelles :
- les zones dopées principales sont séparées par une zone d'un semi conducteur dans sa plus grande part non intentionnellement dopée, dite zone intrinsèque, et forment ensemble une diode de type PIN ; ou
- la zone intrinsèque comprend en outre au moins une zone dopée de type P ou N et formant une couche plane horizontale ou verticale (ou d'une façon plus générale une couche plane parallèle à un plan séparant les zones dopées principales entre elles), dite plan de dopage ; ou
- les zones dopées principales de la diode sont situées de part et d'autre du centre de la zone active par rapport à un plan normal au plan du substrat (et parallèle au guide d'onde), dite diode latérale ou horizontale, cette diode comprenant une zone intrinsèque avec au moins un plan dopé vertical ; ou
- les zones dopées principales de la diode sont situées de part et d'autre du centre de la zone active par rapport à un plan horizontal (c'est à dire parallèle au plan du substrat), dite diode verticale, cette diode comprenant une zone intrinsèque avec au moins un plan dopé horizontal ; ou
- la diode est de type PIN avec un seul plan dopé ; ou
- les zones dopées principales sont en contact entre elles dans une zone dite de jonction et forment ensemble une diode de type PN.

Les caractéristiques ci-dessus peuvent être avantageusement combinées avec toutes les configurations de diodes connues pour de tels modulateurs électro-optiques. Même si toutes ces combinaisons ne peuvent être décrites ici en détail de façon exhaustive, elles sont ici explicitement envisagées.

Ainsi, les caractéristiques ici décrites pour les zones actives principales peuvent être appliquées aux zones dopées P, ou aux zones dopées N, ou aussi aux deux.

Elles peuvent aussi être appliquées aux configurations avec plan de dopage P mais aussi à celles avec plan de dopage N.

Les caractéristiques de traitement du substrat pour limiter les effets capacitifs peuvent être appliquées aux configurations en diode latérale/horizontale mais aussi en diode verticale. Plus particulièrement dans le cas de la diode verticale, ces caractéristiques peuvent aussi être appliquées aux régions principales situées autour de la diode, dans un plan horizontal (parallèle au plan du substrat).

Dans le même esprit, l'invention propose un procédé de fabrication combinant des technologies connues organisées pour la réalisation d'un composant tel que défini dans la revendication 1.

Plus particulièrement, ce procédé comprend la réalisation d'une couche de guide d'onde de façon à obtenir :
- dans la région active du guide d'onde, une épaisseur déterminée (par exemple conforme ou inférieure aux valeurs précédemment utilisées pour la réalisation d'un modulateur électro-optique), et
- dans au moins une partie d'au moins une des régions dopées principales, une épaisseur significativement plus importante que dans la partie active du guide d'onde ainsi qu'une augmentation de la dimension horizontale de ladite partie d'au moins une des régions dopées principales.

Ces dénivellations peuvent être réalisées par exemple :
- par croissance de la couche de guide d'onde, en ménageant des réserves dans les zones devant être de plus faible épaisseur, ou
- par gravure de la couche de guide d'onde, en ménageant des réserves dans les zones devant être de plus forte épaisseur,
- ou une combinaison des deux.

Plus particulièrement, l'invention propose un tel procédé comprenant l'utilisation d'un substrat ou de couches environnantes (dessus et/ou dessous) en un semi conducteur d'une résistivité supérieure à 100 ohms.cm ; la résistivité peut être avantageusement supérieure à 200 ohms.cm (voire supérieure à 500 ou 750 ohms.cm) : pour diminuer l'influence capacitive dudit substrat sur la diode de modulation dudit composant.

L'invention propose en outre un tel procédé comprenant au moins une intégration du composant dans un circuit complexe ou compact ou hybride par un procédé du type « intégration trois dimensions ». Ce procédé de fabrication comprend alors la réalisation du composant tel que divulgué ici sur une partie de circuit ou de substrat qui sera ultérieurement assemblée et/ou superposée avec une autre partie de circuit ou de substrat, selon des méthodes connues.

Selon l'invention, un tel procédé peut comprendre par exemple :
- un recouvrement dudit composant par une ou plusieurs couches formant au moins un composant d'une fonction différente,
- un assemblage avec une ou plusieurs couches formant au moins un composant d'une fonction différente, ou
- une combinaison de ces méthodes entre elles ou avec d'autres.

Dans le même esprit, l'invention propose en outre un dispositif pour commander un signal optique à partir d'un signal électrique, comprenant au moins un composant de commande tel que divulgué ici.

Selon une particularité, le composant de commande y est utilisé pour réaliser une modulation de phase dans un signal optique injecté à une extrémité du micro-guide d'onde dudit composant de commande, en appliquant le signal électrique aux électrodes de la diode dudit composant de commande.

De préférence, le composant de commande comprend une diode PN, ou une diode PIN sans plan dopé dans sa région intrinsèque, ou une diode PIN avec au moins un plan dopé dans sa région intrinsèque, ladite diode étant utilisée en mode de type déplétion.

Alternativement, le composant de commande comprend une diode PN, ou une diode PIN sans plan dopé dans sa région intrinsèque, ladite diode étant utilisée en mode de type injection de porteurs.

L'invention propose ainsi un tel dispositif utilisant au moins un tel composant de commande pour réaliser une modulation d'intensité dans un signal optique.

Plus particulièrement, le dispositif utilise au moins un tel composant de commande pour réaliser une modulation de phase dans un signal optique, de préférence au sein d'un dispositif interférométrique de type Mach-Zehnder agencé pour transformer ladite modulation de phase en une modulation d'intensité dudit signal optique.

L'interféromètre de Mach Zehnder présente de nombreux avantages, car il offre une faible sensibilité aux variations technologiques et à la température. De plus, sa structure en longueur se prête particulièrement bien à l'intégration des caractéristiques divulguées ici, en particulier de dénivellation autour de la région active.

Un tel dispositif peut aussi utiliser un tel composant de commande pour réaliser une modulation de phase dans un signal optique au sein d'un résonateur Fabry-Perot ou d'un résonateur à anneau agencé pour transformer ladite modulation de phase en une modulation d'intensité dudit signal optique.

L'invention est utilisable dans toutes les applications nécessitant une modulation optique à partir de signaux électriques à haut débit, et en particulier dans les applications de télécommunications optiques, interconnexions optiques dans les microprocesseurs, bio photonique.

Des modes de réalisation variés de l'invention sont prévus, intégrant selon l'ensemble de leurs combinaisons possibles les différentes caractéristiques optionnelles exposées ici.

D'autres particularités et avantages de l'invention ressortiront de la description détaillée d'un mode de mise en oeuvre nullement limitatif, et des dessins annexés sur lesquels :
- la FIGURE 1 est une vue en coupe transversale illustrant un exemple de l'art antérieur comprenant une diode de type PIN en configuration latérale avec un plan dopé vertical dans sa région intrinsèque, tel qu'illustré dans le document WO 2005/093480 ;
- la FIGURE 2 est une vue en coupe transversale illustrant exemple l'art antérieur comprenant une diode de type PN en configuration latérale, tel que divulgué dans le document US 7,251,408 ;
- la FIGURE 3 illustre un exemple d'implantation et de fonctionnement d'un modulateur à variation de phase monté en interféromètre de Mach Zehnder asymétrique ;
- la FIGURE 4 illustre un exemple d'implantation et de fonctionnement du modulateur de la FIGURE 3 dans un circuit optique émettant en fonction d'un signal électronique d'entrée, au sein d'un circuit microélectronique comprenant une distribution optique ;
- la FIGURE 5 est une vue en coupe transversale illustrant un exemple d'un composant présentant une augmentation de la dimension transversale au courant avec surépaisseur vers le haut des zones principales, dans une configuration latérale de type PIN avec plan dopé vertical ;
- la FIGURE 5b est une vue similaire à la FIGURE 5, illustrant le fonctionnement des surépaisseurs de diminution des résistances d'accès, pour des zones dopées principales de proportions légèrement différentes, dans une vue partielle centrée sur la partie gauche de la figure ;
- la FIGURE 6 est une vue en coupe transversale illustrant un exemple d'un composant présentant une augmentation de la dimension transversale au courant avec surépaisseur des zones principales vers le haut et vers le bas, et où la surface supérieure des surépaisseurs est coplanaire à la surface de la nervure de guidage et à la surface générale du composant dans une configuration latérale de type PIN avec plan dopé vertical ;
- la FIGURE 7 est une vue en coupe transversale illustrant un exemple d'un composant présentant une augmentation de la dimension transversale au courant avec surépaisseur vers le haut des zones principales, dans une configuration latérale de type PN ;
- la FIGURE 8 est une vue en coupe transversale illustrant un exemple d'un composant présentant une augmentation de la dimension transversale au courant avec surépaisseur vers le haut des zones principales, dans une configuration latérale de type PN non symétrique ;
- la FIGURE 9 est une vue en coupe transversale illustrant un exemple d'un composant présentant une augmentation de la dimension transversale au courant avec surépaisseur vers le haut des zones principales, dans une configuration latérale de type PIN non symétrique avec deux niveaux de dopage des zones principales et un plan dopé vertical unique dans la région intrinsèque ;
- la FIGURE 10 est une vue en coupe transversale illustrant un exemple d'un composant présentant une augmentation de la dimension transversale au courant avec surépaisseur des zones principales, dans une configuration verticale de type PIN avec plan dopé horizontal ;
- la FIGURE 11 est une vue en coupe transversale illustrant un exemple d'un composant présentant une augmentation de la dimension transversale au courant avec surépaisseur des zones principales, dans une configuration verticale de type PN avec deux niveaux de dopage des zones dopées principales ;
- la FIGURE 12 est une vue en coupe transversale illustrant un exemple de mode de réalisation de l'invention avec suppression de l'isolant à l'aplomb de la diode dans une configuration latérale de type PIN avec plan dopé vertical ;
- la FIGURE 13 est une vue en coupe transversale illustrant un exemple de mode de réalisation de l'invention avec amincissement de l'isolant sous jacent à l'aplomb de la diode dans une configuration latérale de type PIN avec plan dopé vertical ;
- la FIGURE 14 est une vue en coupe transversale illustrant un exemple de mode de réalisation de l'invention avec suppression de l'isolant et du substrat sous jacents à l'aplomb de la diode dans une configuration latérale de type PIN avec plan dopé vertical ;
- la FIGURE 15 est une vue en coupe transversale illustrant un exemple de mode de réalisation de l'invention avec épaississement de l'isolant et suppression du substrat à l'aplomb de la diode dans une configuration latérale de type PIN avec plan dopé vertical ;
- la FIGURE 16 illustre un exemple de mode de réalisation de modulateur d'intensité selon l'invention, comprenant un interféromètre de Mach Zehnder similaire à celui de la FIGURE 3 dans une vue en coupe selon AA, incluant un modulateur de phase selon l'invention, avec :
   ∘ surépaisseur vers le haut des parties dopées principales,
   ∘ suppression du substrat et amincissement de l'isolant à l'aplomb de la diode et en dessous de celle-ci,
   ∘ dans une configuration de type PIN asymétrique à plan dopé vertical ;
- la FIGURE 17 représente le mode de réalisation de l'invention de la coupe de la FIGURE 16, après recouvrement par une couche d'isolant et une couche de semi conducteur pour une intégration 3D, dans lequel, à l'aplomb de la diode et au dessus de celle-ci :
   ∘ la couche d'isolant est amincie, et
   ∘ la couche de semi-conducteur est supprimée.
- les FIGURE 18a et b illustrent deux phases d'un procédé d'intégration 3D par assemblage d'un circuit optronique comprenant un modulateur selon l'invention sur un circuit électronique de type CMOS.

### Description d'un état de la technique

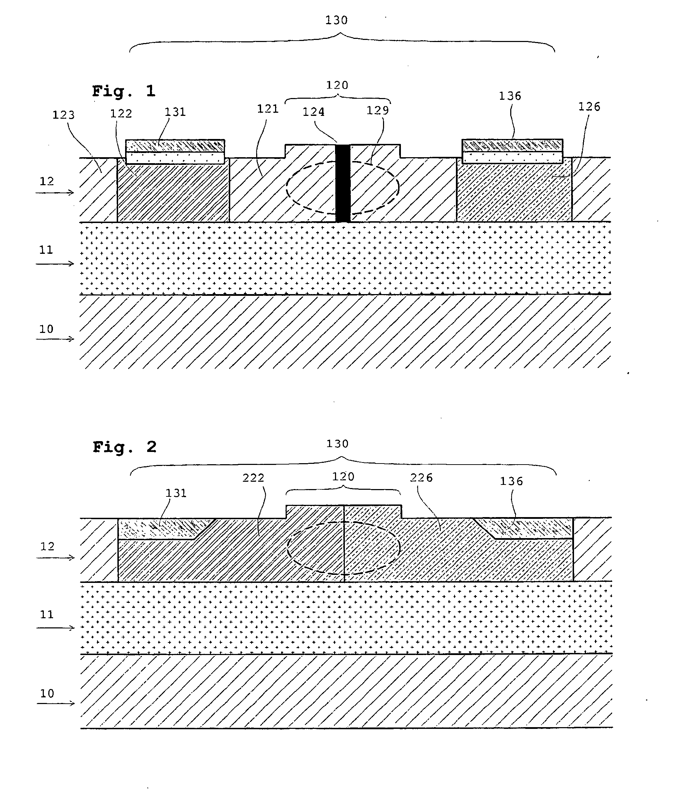

L'état de la technique actuel comprend des modulateurs électro-optiques au silicium comprenant une région linéaire formant un guide d'onde, tels qu'illustrés aux schémas des FIGURE 1 et FIGURE 2 selon des coupes transversales à la direction du guide d'onde linéaire. Ces figures représentent des types de modulateurs tels qu'enseignés respectivement par :
- FIGURE 1 : WO 2005/093480 et publication D. MARRIS-MORINI et al, "Low loss and high speed silicon optical modulator based on a lateral carrier depletion structure", Optics express, 16, 1, 334-339 (2008);
- FIGURE 2: US 7,251,408.

Le guide d'onde est réalisé au sein de l'épaisseur d'une couche 12 de silicium monocristallin formant un guide d'onde plan et qui est portée par une couche d'isolant. Ce composant est typiquement réalisé sur un substrat de type SOI (« Silicon On Isolant ») : la couche 12 de silicium guide d'onde repose alors sur une couche 11 de silice (SiO₂), qui repose elle-même sur une couche 10 de silicium.

Le guide d'onde linéaire est obtenu par exemple par une nervure 120, aussi appelée arête, saillant de la surface supérieure de la couche 12 guide d'onde. La différence d'épaisseur de la nervure 120 crée un guidage de la lumière dans la région 129 qu'elle surplombe. Dans cette région 129 de section sensiblement ovale se propage un mode optique caractérisé par son indice effectif de propagation, qui réalise un guidage linéaire des ondes lumineuses qui y sont injectées.

La couche 12 de silicium guide d'onde est traitée pour réaliser une diode 130 linéaire entourant et/ou incluant la région du guide d'onde linéaire 129. Cette diode 130 est formée en dopant le semi-conducteur pour obtenir des régions présentant respectivement un excès de trous (positivement chargés : dopage 122 de type P) et un excès d'électrons (négativement chargés : dopage 126 de type N), ici les deux régions 122 et 126 entourant la région guide 129. Dans l'exemple de la FIGURE 1, la diode comprend en outre une région intrinsèque 121 sensiblement centrale qui est non intentionnellement dopée, formant une diode de type PIN. Dans cet exemple, cette zone intrinsèque inclut en outre une ou plusieurs zones dopées formant une ou plusieurs couche planes 124, formant une diode de type PIN à plan de dopage. Dans l'exemple de la FIGURE 2, les deux régions dopées 222 et 226 respectivement P et N se rencontrent et forment une diode de type PN.

Le signal électrique à transformer est appliqué sur les bornes 131 et 136 de cette diode, ce qui modifie l'indice effectif de réfraction au sein de la région du guide d'onde linéaire 129 en fonction du signal appliqué. Cette modification de l'indice effectif crée une modification de la transmission des ondes lumineuses qui traversent le guide d'onde, sous la forme d'un déphasage dépendant du signal électrique appliqué.

En injectant à une extrémité de ce guide d'onde linéaire une onde lumineuse régulière ou connue issue d'une source lumineuse S, par exemple un laser, on obtient en sortie un signal optique dont la phase est modulée en fonction du signal électrique.

Cette modulation de phase peut ensuite être intégrée au sein d'un circuit optique pour fournir une modulation en intensité, par exemple au sein d'un interféromètre de type Mach-Zehnder ou au sein d'un résonateur de type Fabry-Perot ou d'un résonateur en anneau.

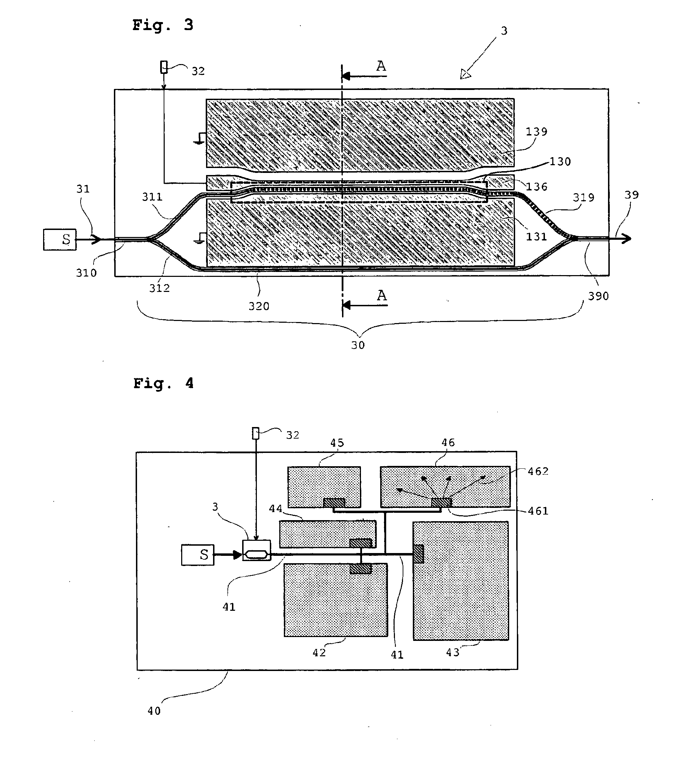

Comme illustré en FIGURE 3, cette diode linéaire 130 peut être implantée dans un circuit optique 30 formant un interféromètre de Mach Zehnder, pour réaliser un modulateur 3 à variation de phase.

Le signal 32 électrique par rapport à la masse est appliqué à une électrode 136, l'autre électrode 131 étant connectée à la masse. L'électrode 136 recevant le signal 32 est située de façon centrale entre l'électrode de masse 131 et une autre électrode de masse 139 qui lui est sensiblement symétrique.

Une source lumineuse S, par exemple un laser, produit une onde lumineuse 31 qui est injectée à une extrémité 310 du circuit optique.

Une partie 311 de cette onde 310 est injectée dans le guide d'onde linéaire 120 de la diode 130, et fournit en sortie un signal optique 319 dont la phase est modulée en fonction du signal électrique 32.

Une autre partie 312 de l'onde lumineuse 31 est injectée dans un autre guide optique 320 de même longueur, et en ressort inchangé.

Les deux parties 311, 312 sont réunies à la sortie 390 et interférent entre elles pour donner une onde lumineuse 39 dont l'intensité varie en fonction du signal électrique 32.

La FIGURE 4 représente un exemple de mise en oeuvre d'un modulateur optique, selon l'invention ou selon l'art antérieur dans un circuit au sein d'un circuit microélectronique ou micro optronique.

Le signal électrique 32 est injecté dans le modulateur 3, pour fournir un signal optique qui est envoyé dans un circuit 41 de distribution optique dessiné sur une plaque 40, par exemple en SOI. Cette plaque constitue un circuit intégré optique comprenant différents blocs fonctionnels 42 à 46, comprenant eux-mêmes une distribution électrique 462 à partir d'un photodétecteur 461 en entrée.

### Description de l'invention

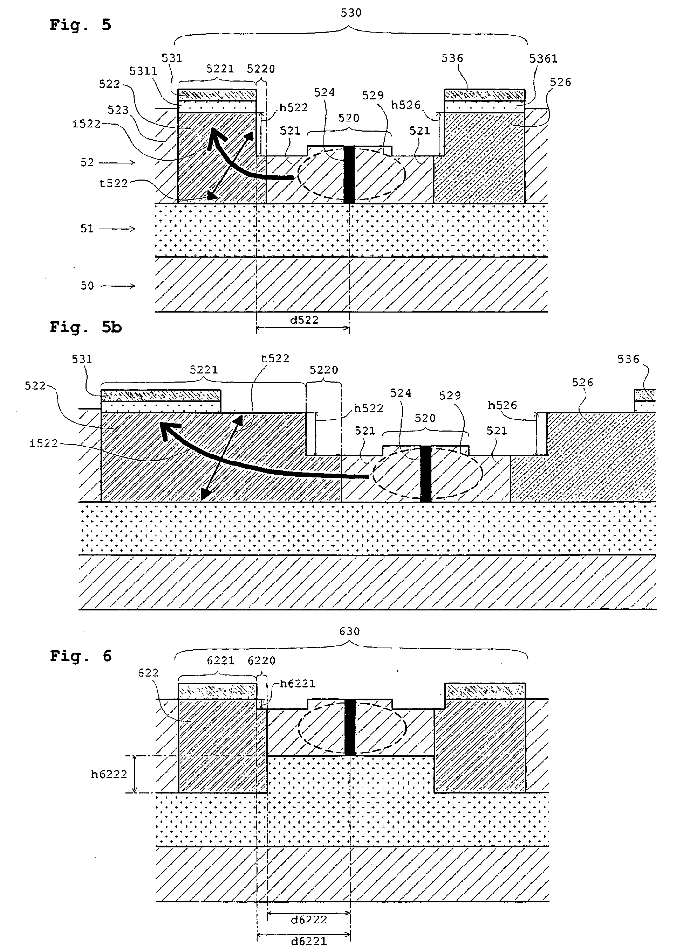

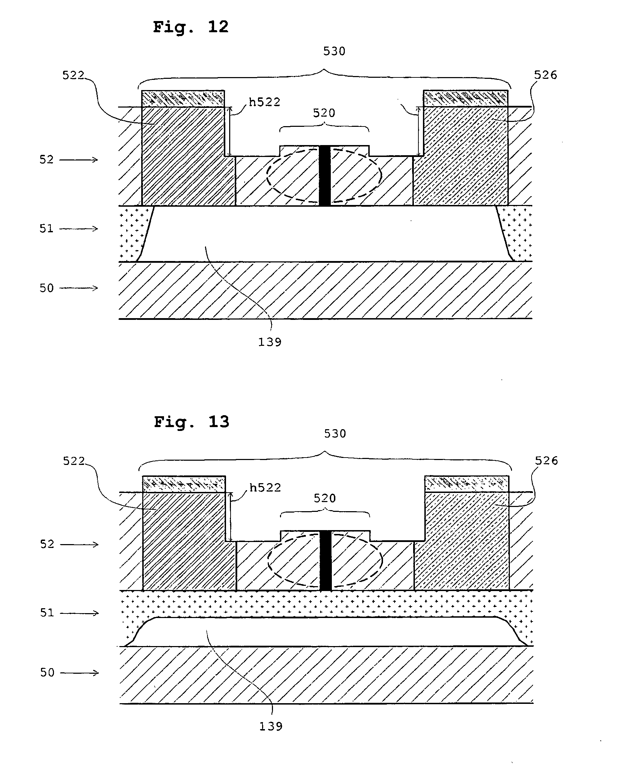

Les FIGURE 5 à FIGURE 18 décrivent différents exemples de composants présentant une augmentation de la dimension transversale au courant. Bien que toutes les combinaisons des variantes illustrées sur les figures ne puissent être exposées ici de façon exhaustive, l'ensemble de ces combinaisons possibles est ici explicitement proposée par l'invention telle que définie dans la revendication 1 et illustrée par les figures 12 à 18b.

En particulier, le positionnement entre eux des surépaisseurs, des limites de zones dopées, des limites d'électrode, ainsi que l'existence ou non de zone intrinsèque ou de plan de dopage ou de zones à dopage progressif, ainsi que l'existence et la nature des zones modifiées d'isolant ou de substrat, sont des caractéristiques qui sont susceptibles d'être combinées différemment entre elles en fonction des besoin du cahier des charges de conception, tout en bénéficiant des avantages de l'invention et sans sortir de l'esprit de l'invention

telle que définie dans la revendication 1.

Les technologies connues de gravure ou de dépôt ou croissance, par exemple celles citées dans le document WO 2005/093480, sont utilisables pour la réalisation des différents éléments décrits ici. Elles ne seront donc pas décrites ou spécifiées ici. Les particularités géométriques de l'invention sont alors obtenues en modifiant les motifs ou les paramètres en oeuvre dans ces technologies, d'une façon qui dépend directement et clairement des formes finales ici décrites.

### Résistance d'accès du composant

Les FIGURE 5, 5b et FIGURE 6 illustrent deux exemples de composants présentant une augmentation de la dimension transversale au courant dans une configuration latérale de type PIN avec plan dopé vertical.

Le guide d'onde est réalisé au sein de l'épaisseur d'une couche 52 de silicium monocristallin formant un guide d'onde plan et qui est portée par une couche d'isolant. Ce composant est par exemple réalisé sur un substrat de type SOI (« Silicon On Isolant ») : la couche 52 de silicium guide d'onde repose alors sur une couche 51 de silice (SiO₂), qui repose elle-même sur le reste de la couche 50 de silicium du substrat d'origine.

Le guide d'onde linéaire est obtenu par exemple par une nervure 520, aussi appelée arête, saillant de la surface supérieure de la couche 52 guide d'onde. La différence d'épaisseur de la nervure 520 crée un guidage de la lumière dans la région ou zone active 529 qu'elle surplombe. Dans cette région 529 de section sensiblement ovale se propage un mode optique caractérisé par son indice effectif de propagation, qui réalise un guidage linéaire des ondes lumineuses qui y sont injectées.

La couche 52 de silicium guide d'onde est traitée pour réaliser une diode 530 linéaire (vue ici en coupe transversale) entourant et/ou incluant la région du guide d'onde linéaire 529. Dans cet exemple, la diode linéaire 530 est de type PIN, et formée de deux parties dopées principales 522 et 526 dopées respectivement P et N. Ces deux parties 522 et 526 entourent une zone intrinsèque 521 non intentionnellement dopée, laquelle inclut une ou plusieurs zones dopées formant un ou plusieurs plans de dopage 524, de type P ou N selon les configurations voulues.

Dans l'exemple de la FIGURE 5 et FIGURE 5b, les parties dopées principales 522 et 526 présentent chacune une zone extérieure 5221 éloignée du mode optique 529, et une zone intérieure 5220 située du côté du mode optique 529.

Selon une direction transversale à la direction de circulation des courants i522 parcourant la partie dopée 522 entre la zone active 529 et l'électrode d'accès 531 correspondante, la zone extérieure 5221 présente une augmentation de l'épaisseur t522 de matériau traversé par ces courants.

Pour obtenir cette augmentation de l'épaisseur t522 de matériau traversé, la zone extérieure 5221 présente par exemple une surépaisseur d'une dénivellation h522 par rapport à la zone intérieure 5220, permettant une diminution de la résistance d'accès de la diode du côté de la zone dopée principale concernée, de préférence pour les deux zones dopées principales 522 et 526.

Cette dénivellation h522 située à une distance d522 du centre du mode optique 529, calculée ou testée pour ne pas trop influencer la propagation du mode optique et donc conserver de faibles pertes de propagation. Cette distance est choisie la plus faible possible pour diminuer le plus possible les résistances d'accès, tout en restant d'une valeur minimale suffisante, mesurée ou testée, pour ne pas trop perturber la transmission optique ni trop augmenter les pertes optiques dans la diode.

Le signal électrique à transformer est appliqué sur les bornes de cette diode 530 par des électrodes 531 et 536, par exemple métalliques. Ces électrodes sont disposées sur la surface supérieure des zones dopées principales 522 et 526, sur tout ou partie de leur partie en surépaisseur 5221.

Dans l'exemple de la FIGURE 5, une couche intermédiaire de siliciure 5311 et 5361, par exemple de nickel ou de platine, est prévue entre ces électrodes 531 et 536 et le silicium dopé de leur partie dopée principale correspondante 522 et 526, pour améliorer le contact électrique.

Dans ce même exemple, on voit que la surépaisseur h522 d'amélioration de la résistance d'accès des parties dopées principales 522 et 526 est disposée uniquement vers le haut, c'est à dire du côté opposé au substrat de base 50.

Dans d'autres exemples, cette surépaisseur peut être située vers le bas, c'est-à-dire en dessous de la partie centrale de la diode, et même comme ici répartie des deux côtés.

L'espace dégagé au dessus du guide d'onde 520 est ici laissé vide, mais peut aussi être recouvert d'un isolant tel que de la silice SiO2, par exemple pour des raisons de protection ou d'isolation.

La FIGURE 6 représente un exemple proche de la FIGURE 5, dans lequel les surépaisseurs d'amélioration de la résistance d'accès des parties dopées principales 622 et 626 sont réparties en une dénivellation supérieure h6221 au dessus de la partie centrale, et une dénivellation inférieure h6222 au dessous de cette partie centrale. Ces deux dénivellations supérieures et inférieures peuvent être situées à la même distance du coeur du guide, mais aussi à des distances différentes d6221 et d6222 de ce coeur comme illustré ici.

En FIGURE 7 est illustré un exemple de composant présentant une augmentation de la dimension transversale au courant similaire à la FIGURE 5 mais pour une diode de type PN, où les deux parties dopées principales 722 et 726 se rencontrent au centre de la nervure 720 de guidage du mode optique 729.

La FIGURE 8 illustre un exemple de composant présentant une augmentation de la dimension transversale au courant similaire à celui de la FIGURE 7, mais dans lequel les deux parties dopées principales 822 et 826 ne sont pas symétriques et se rencontrent sous la nervure 820 de guidage du mode optique 829 mais sur le côté de cette nervure.

La FIGURE 9 illustre un exemple de composant présentant une augmentation de la dimension transversale au courant similaire à la FIGURE 5, mais dans lequel les zones dopées principales présentent chacune deux zones de dopage différents, qui sont en outre réparties de façon non symétrique.

La zone dopée principale 922 située à gauche de la figure, par exemple de type P, est répartie en une zone extérieure 9222 englobant totalement la surépaisseur et dopée plus fortement qu'une zone dopée intérieure 9221, laquelle est au contact de la zone intrinsèque 921 en dehors de la nervure 920 de guidage du mode optique 929. En outre, l'électrode 931 d'accès à cette zone dopée principale 922 ne recouvre qu'une partie de la surépaisseur et s'arrête à une certaine distance d931 de sa dénivellation. L'électrode d'accès 931 est donc ainsi plus écartée de la zone active 929 que cette dénivellation h922, de la valeur de cette distance d931.

A droite de la figure, la zone dopée principale 926, par exemple de type N, est répartie en une zone extérieure 9262 dopée plus fortement qu'une zone dopée intérieure 9261, laquelle est au contact de la zone intrinsèque 921 sous la nervure 920 de guidage mais sur le côté de celle-ci. en outre, la zone intérieure 9261 englobe une partie de la surépaisseur et vient ainsi en contact avec l'électrode 936 correspondante.

La FIGURE 10 illustre un exemple de composant présentant une augmentation de la dimension transversale au courant, dans une configuration verticale de type PIN avec plan dopé horizontal 1024 Cet exemple comprend une diode linéaire 1030 avec surépaisseur des zones dopées principales 1022 et 1026.

Le guide optique comprend une nervure 1020 formée par un rétrécissement brutal de la largeur d'une partie intrinsèque 1021 non intentionnellement dopée, dans sa partie supérieure.

Cette zone intrinsèque comprend un plan dopé horizontal unique 1024 et est entourée sur les côtés par un isolant 1000. Elle est en contact avec les zones dopées principales 1022 et 1026 par sa surface inférieure et respectivement supérieure.

Sur la partie gauche de la figure, la zone dopée principale 1022, par exemple de type P, présente une partie intérieure 1022a en contact avec le dessous de la zone intrinsèque 1021. A une distance d1022 du centre du mode optique 1029, la zone dopée principale 1022 présente une dénivellation h1022 formant une surépaisseur dirigée vers le haut dans une partie extérieure 1022b, et sur le dessus de laquelle est disposée l'électrode 1031.

Sur la partie droite de la figure, la zone dopée principale 1026, par exemple de type N, présente une partie intérieure 1026a en contact avec le dessus de la nervure portée par la zone intrinsèque 1021. A une distance d1026 du centre du mode optique 1029, la zone dopée principale 1026 présente une dénivellation h1026 formant une surépaisseur dans une partie extérieure 1026b, sur le dessus de laquelle est disposée l'électrode 1036. Cette surépaisseur est dirigée vers le bas, et descend ici jusqu'à la surface de la couche d'isolant 101, par exemple la silice d'un substrat SOI formé à partir d'un substrat de silicium 100 initial.

Pour chacune des zones dopées principales 1022 et 1026, la surépaisseur créée par la dénivellation h1022 dans la partie extérieure 1026b permet une augmentation de la largeur t1026 de matériau traversé par les courants i1026 circulant entre la zone active 1029 et l'électrode d'accès 1036 correspondante.

A titre de comparaison, dans l'art antérieur décrit par le document WO 2005/093480, les deux parties dopées principales était d'une épaisseur constante. Une électrode présentait une partie plongeant qui descendait jusqu'à la surface de la partie dopée principale située en bas de la partie intrinsèque, cette partie dopée étant d'épaisseur constante. L'autre partie dopée principale était d'une épaisseur constante sur le dessus de la partie intrinsèque.

La FIGURE 11 illustre un exemple de composant avec surépaisseur des zones principales, dans une configuration verticale de type PN avec deux niveaux de dopage des zones dopées principales.

Les deux parties dopées principales de la diode 1130 se rejoignent dans une région ou nervure 1120 de section sensiblement rectangulaire, formant un guide pour le mode optique 1129.

Le côté inférieur de cette jonction est formé par une partie dopée principale 1122 dite inférieure, par exemple de type P, s'étendant horizontalement des deux côtés en dessous de la nervure 1120. De chaque côté de la région de guidage 1120, cette partie dopée principale 1122 présente une dénivellation h1122 formant une surépaisseur remontant jusqu'à la surface du composant, et sur laquelle est disposée une électrode 1131a et 1131c.

Optionnellement, cette partie dopée principale inférieure 1122 présente deux niveaux de dopage différents : la partie centrale 1122a présente un premier niveau de dopage s'étendant jusqu'aux extrémités latérales pour sa partie inférieure. Les deux parties extérieures 1122b et 1122c de cette partie principale 1122 présentent un deuxième niveau de dopage, plus fort, pouvant démarrer en partie avant la dénivellation h1122.

Le côté supérieur de la jonction est formé par une partie dopée principale 1126 dite supérieure, par exemple de type N, s'étendant horizontalement d'un côté de la région guide 1120. Dans sa partie éloignée de la région guide 1120, cette partie dopée principale 1126 présente une dénivellation h1126 formant une surépaisseur remontant jusqu'à la surface du composant, et sur laquelle est disposée une électrode 1136.

Pour chacune des zones dopées principales 1122 et 1126, la surépaisseur créée par la dénivellation h1122 dans la partie extérieure 11261 et 11221a crée une augmentation de la largeur t1126 et t1122a de matériau traversé par les courants i1126 et i1122a circulant entre la zone active 1129 et l'électrode d'accès 1136 et 1131a correspondante.

La largeur t1126 (et/ou t1122a) de cette épaisseur traversée peut aussi être augmentée en agrandissant la dimension horizontale d1126 (et/ou d1122a) de la partie extérieure 11261 de chacune de ces zones dopées principales 1126 (et/ou 1122).

Optionnellement, cette partie dopée principale supérieure 1126 présente deux niveaux de dopage différents : la partie centrale 1126a présente un premier niveau de dopage, et la partie du côté de l'électrode 1136 présente un deuxième niveau de dopage, plus fort, dans la partie en contact avec l'électrode.

Ainsi que précisé plus haut, la position des limites des zones de dopage ou de niveaux de dopage peut varier par rapport à la position des surépaisseurs et/ou des électrodes.

### Influence de l'environnement capacitif

Les FIGURE 12 à FIGURE 15 illustrent des exemples de modes de réalisation de l'invention telle que définie dans la revendication 1 comprenant, outre une configuration avec des surépaisseurs h522 et h526 de façon similaire à l'exemple de la FIGURE 5, des caractéristiques de modification des couches à l'aplomb de a diode 530 pour diminuer l'influence de l'environnement capacitif sur le modulateur.

Par augmentation de l'isolation : les FIGURE 12 FIGURE 13 présentent deux exemples dans lesquels la couche d'isolant 51 a été supprimée et respectivement amincie, dans la zone 139 située à l'aplomb de la diode 530, de préférence en y incluant les zones dopées principales 522 et 526.

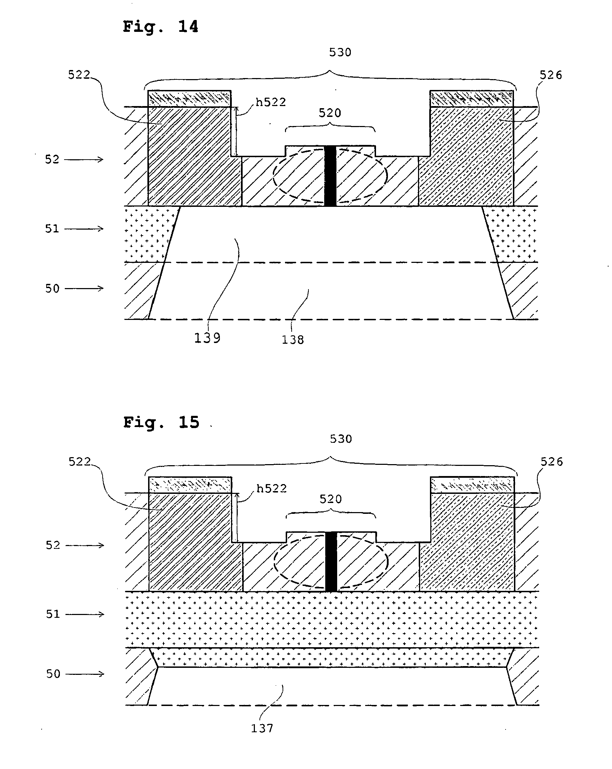

Par augmentation de la résistance du substrat : la FIGURE 14 présente un exemple de mode de réalisation de l'invention dans lequel, outre une configuration avec des surépaisseurs et une suppression de l'isolant de façon similaire à l'exemple de la FIGURE 12, on a supprimé le semiconducteur 50 du substrat d'origine dans la zone 138 située à l'aplomb de la diode 530, de préférence en y incluant les zones dopées principales 522 et 526.

Par une combinaison de certaines de ces caractéristiques : la FIGURE 15 présente un exemple de mode de réalisation de l'invention dans lequel on a supprimé le silicium 50 du substrat et augmenté l'épaisseur de l'isolant, 51 dans la zone 137 située à l'aplomb de la diode 530, de préférence en y incluant les zones dopées principales 522 et 526.

Cette caractéristique peut être obtenue par exemple en amincissant d'abord le silicium 50 dans cette région 137, puis en oxydant le silicium qui y subsiste pour le transformer en silice isolante.

Alternativement, et en fonction de son épaisseur initiale, il est aussi possible d'oxyder directement le silicium 50 du substrat dans cette région 137, de façon à le transformer en isolant sur toute son épaisseur jusqu'à la couche 51 d'isolant.

### Intégration dans un circuit

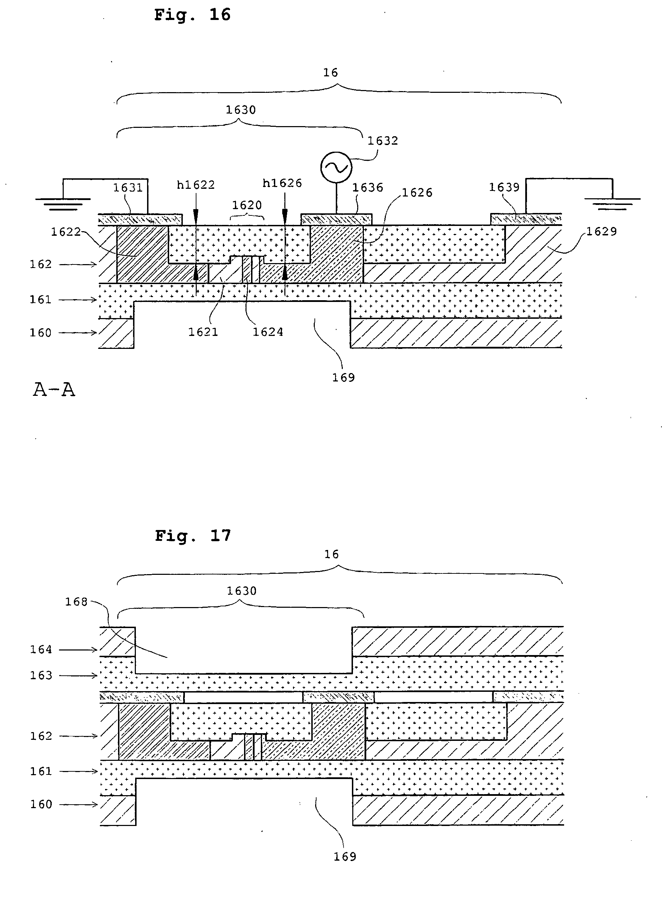

La FIGURE 16 illustre un exemple de modulateur d'intensité selon l'invention. La modulation en intensité est obtenue dans cet exemple par un montage en interféromètre de Mach Zehnder (similaire à celui de la FIGURE 3) d'un modulateur de phase selon l'invention. Dans ce mode de réalisation de l'invention, le modulateur de phase comprend une diode linéaire 1630 de type PIN en configuration latérale asymétrique avec un plan dopé 1624. Cette diode comprend deux parties dopées principales 1622 et 1626, chacune avec une dénivellation h1622 et respectivement h1626, formant deux surépaisseurs sur lesquelles sont disposées deux électrodes 1631 et 1636.

La couche sous-jacente 160 de substrat de semiconducteur est supprimée et la couche sous jacente d'isolant 161 est amincie, en une région 169 s'étendant à l'aplomb de la diode 1630.

L'une 1636 des électrodes est reliée au signal électrique 1632 d'entrée, et l'autre électrode 1631 est reliée à la masse. De façon sensiblement symétrique autour de l'électrode 1636 de signal, une deuxième électrode de masse 139 sensiblement symétrique à la première 1631 est disposée sur une autre partie en semiconducteur non dopée de forme sensiblement symétrique à la partie dopée principale 1622 qui est connectée à la première électrode de masse 1631.

La FIGURE 17 représente un modulateur d'intensité similaire à celui de la FIGURE 16 sur lequel a été ajoutée, par exemple par collage ou par dépôt, une couche d'isolant 163 elle-même recouverte d'une couche substrat semiconducteur 164.

De la même façon et pour les mêmes raisons que pour les couches sous jacentes d'isolant 161 et de substrat 160, la couche supérieure de substrat 164 a été supprimée et la couche supérieure d'isolant 163 a été amincie en une région 168 s'étendant à l'aplomb de la diode 1630.

A partir de cet exemple représentant la suppression du substrat et l'amincissement de l'isolant, il est ici illustré que toutes les caractéristiques de l'invention portant sur le traitement des couches d'isolant et de substrat peuvent s'appliquer aussi aux couches situées au dessus de la diode, et donc ainsi aux couches entourant cette diode sur ses deux côtés.

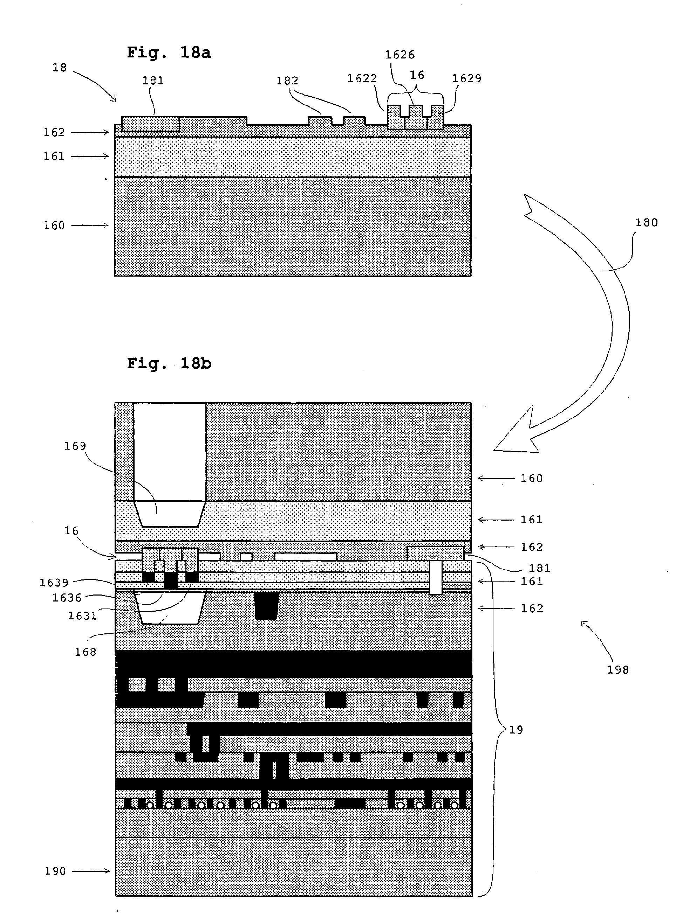

Les FIGURE 18a et FIGURE 18b illustrent selon l'invention deux phases d'un procédé d'intégration dit « intégration 3D », constituant un exemple de procédé d'intégration incluant un modulateur selon l'invention similaire à celui de la FIGURE 16 incluant ses caractéristiques de résistances d'accès ainsi que ses caractéristiques de traitement des couches voisines 160 et 161.

Un modulateur d'intensité 16 selon l'invention est réalisé à la surface d'un circuit optique ou optronique 18, basé sur une couche d'isolant 161 portée par un substrat semiconducteur 160. Ce circuit 18 comprend par exemple un photodétecteur 181 et des guides d'onde 182.

Lors d'une étape d'assemblage 180, par exemple par collage, ce circuit 18 est collé en position inversée sur un autre circuit, par exemple un circuit électronique 19 de type CMOS basé sur un substrat 190. Cet assemblage s'effectue en appliquant la surface supérieure (du côté opposé à son substrat initial 160) du circuit 18 sur la surface supérieure (du côté opposé à son substrat 190) du circuit 19.

On obtient ainsi un circuit hybride incluant une partie optronique, d'une grande compacité et ne nécessitant pas de soumettre l'ensemble du circuit 19 aux traitements et opérations spécifiques aux éléments optiques du circuit optique 18.

Dans le cadre d'un tel procédé d'intégration 3D, le traitement des couches voisines de la diode 1630 du modulateur 16 selon l'invention peut s'effectuer en particulier :
- avant assemblage, sur le circuit CMOS 19, pour des couches d'isolant 163 et de semiconducteur 164 ; et
- avant ou après assemblage, sur le circuit optique 18, pour les couches d'isolant 161 et de semiconducteur 160.

En particulier, l'intégration 3D sur un autre circuit 19 donne au circuit initial 18 une rigidité suffisante pour pouvoir supprimer la totalité du substrat 160 sur lequel il a été initialement réalisé.

On voit ainsi que l'invention permet des gains en matière de performance qui sont applicables à des circuits et des processus de fabrication existants, avec pas ou peu de modifications à apporter à ces circuits ou processus.

Bien sûr, l'invention n'est pas limitée aux exemples qui viennent d'être décrits et de nombreux aménagements peuvent être apportés à ces exemples sans sortir du cadre de l'invention telle que définie dans la revendication 1.

## Revendications

1. Composant optoélectronique pour commander un signal optique (311) circulant dans un microguide d'onde, le composant optoélectronique comprenant ledit microguide d'onde qui est formé à l'aide d'une arête ou d'une nervure (520, 720, 820, 920, 1020, 1620) dépassant de la surface d'une première couche de semi-conducteur (52, 102) au sein d'un substrat de type semi-conducteur sur isolant constitué par ladite première couche (52) de semi-conducteur située sur une couche d'isolant (51), par cette couche d'isolant (51) et par une deuxième couche (50) de semi-conducteur située sous la couche d'isolant (51), le substrat de type semi-conducteur sur isolant étant réalisé à partir d'un substrat d'origine ayant une surface qui définit un plan de référence horizontal,
- ledit microguide d'onde (520, 720, 820, 920, 1020, 1620) comprenant une zone active (529, 729, 829, 929, 1029) susceptible de guider la propagation d'un mode optique résultant de l'injection dudit signal optique dans la zone active, cette zone active étant centrée sur ou entourant le mode optique (529, 729, 829, 929, 1029) et située entre une zone dopée de type P (522, 722, 922, 1022, 1122, 1622) et une zone dopée de type N (526, 726, 926, 1026, 1126, 1626), dites zones dopées principales, formant entre elles une diode (530, 630, 730, 830, 930, 1030, 1130, 1630), lesdites zones principales ayant chacune une épaisseur et une dimension horizontale,
- lesdites zones dopées principales (522, 722, 922, 1022, 1622, 526, 726, 926, 1026, 1126, 1626) P ou N étant reliées à deux électrodes disposées (531, 931, 1031, 1131, 1631, 536, 936, 1036, 1136, 1636) de part et d'autre de ladite zone active (529), latéralement dans un plan parallèle audit plan de référence horizontal ou verticalement par rapport audit plan de référence horizontal, et permettant de polariser ladite diode (530, 630, 730, 830, 930, 1030, 1130, 1630),
**caractérisé en ce que** le composant présente une fréquence de coupure obtenue en réalisant le substrat de type semi-conducteur sur isolant :
- de sorte que :
∘ la couche d'isolant présente une épaisseur d'au moins 2 micromètres, ou
∘ la couche d'isolant (51, 161, 163) est amincie ou retirée, partiellement ou totalement, dans au moins une partie de la zone (139, 169, 168) située à l'aplomb de la diode (530, 630, 730, 830, 930, 1030, 1130, 1630).
- et/ou de sorte que la première couche (52) de semi-conducteur située sur la couche d'isolant (51) est :
∘ réalisée à partir d'un semiconducteur de résistivité supérieure à 100 ohms.cm, ou
- la deuxième couche (50) de semiconducteur située sous la couche d'isolant est retirée ou amincie dans la zone à l'aplomb de la diode ou est réalisée à partir d'un semiconducteur de résistivité supérieure à 100 ohms.cm.

2. Composant selon la revendication précédente, pour lequel au moins une desdites zones dopées principales (522, 526, 1126) présente une augmentation de sa dimension transversale (t522, t1126) au courant (i522, i1126), obtenue par une surépaisseur (h522) en combinaison avec une augmentation de sa dimension horizontale (5221, d1126) dans sa partie (5221, 11261) reliée à son électrode (531, 1136) par rapport à sa partie (5220, 11260) la plus proche de ladite zone active (529, 1129).

3. Composant selon la revendication précédente, pour lequel les deux zones dopées principales (522, 526) présentent une surépaisseur (h522, h526) dans leur partie reliée à leur électrode respective par rapport à leur partie la plus proche de la zone active (529), ladite surépaisseur étant recouverte d'une couche métallique (531, 536) formant la partie inférieure de ladite électrode.

4. Composant selon l'une quelconque des revendications précédentes, pour lequel :
- les zones dopées principales (522, 526, 1022, 1026) sont séparées par une zone d'un semi conducteur non intentionnellement dopée, dite zone intrinsèque (521), ladite diode (530, 630, 930, 1030, 1630) formée entre elles étant de type PIN, les zones dopées pouvant être situées de part et d'autre du centre de la zone active par rapport au plan de référence horizontal, de façon que la diode est de type vertical, ou de part et d'autre dudit centre par rapport à un plan normal audit plan de référence, de façon que la diode est de type latéral, la zone intrinsèque pouvant comprendre au moins une couche plane horizontale dopée dite plan dopé (524, 1024, 1624) ; ou
- les zones dopées principales (722, 1122, 726, 1126) sont en contact entre elles dans une zone dite de jonction et forment ensemble une diode (730, 830, 1130) de type PN.

5. Composant selon la revendication précédente, pour lequel la diode est de type PIN avec un seul plan dopé (524, 1024).

6. Procédé de fabrication comprenant des étapes sélectionnées, définies et combinées de façon à réaliser un composant selon l'une quelconque des revendications 1 à 5.

7. Procédé selon la revendication précédente, comprenant une étape d'utilisation d'un substrat de semi conducteur (50, 100, 160, 164) d'une résistivité supérieure à 100 ohms.cm.

8. Procédé selon l'une quelconque des revendications 6 à 7, comprenant une étape d'utilisation d'un substrat de semi conducteur (50, 100, 160, 164) d'une résistivité supérieure à 200 ohms.cm.

9. Procédé selon la revendication 6 à 8, comprenant au moins une étape d'intégration du composant dans un circuit complexe ou compact ou hybride par un procédé du type « intégration trois dimensions » comprenant
soit un recouvrement dudit composant par une ou plusieurs couches formant au moins un composant d'une fonction différente,
soit un assemblage avec une ou plusieurs couches formant au moins un composant d'une fonction différente,
soit une combinaison des deux.

10. Dispositif (3, 16, 18, 198) pour commander un signal optique à partir d'un signal électrique, le dispositif comprenant au moins un composant optoélectronique selon l'une quelconque des revendications 1 à 5.

11. Dispositif selon la revendication précédente, pour lequel ledit composant optoélectronique est structuré comme un modulateur de phase susceptible de réaliser une modulation de phase dudit signal optique injecté à une extrémité du microguide d'onde dudit composant , en appliquant le signal électrique aux électrodes de la diode dudit composant.

12. Dispositif selon l'une quelconque des revendications 9 à 10, pour lequel au moins un composant optoélectronique est structuré comme un modulateur d'intensité susceptible de réaliser une modulation d'intensité dudit signal optique (31).

13. Dispositif selon l'une quelconque des revendications 10 à 12, pour lequel au moins un composant optoélectronique est structuré comme un modulateur de phase susceptible de réaliser une modulation de phase dans un signal optique (31), ledit composant état placé au sein d'un dispositif (3) interférométrique de type Mach-Zehnder, ou d'un résonateur Fabry-Perot ou d'un résonateur à anneau, chacun de ces derniers étant agencé pour transformer ladite modulation de phase en une modulation d'intensité dudit signal optique.

## Patentansprüche

1. Optoelektronische Komponente zur Steuerung eines in einem Mikro-Wellenleiter laufenden optischen Signals (311), wobei die optoelektronische Komponente den Mikro-Wellenleiter umfasst, der mit Hilfe einer Kante oder einer Rippe (520, 720, 820, 920, 1020, 1620) gebildet ist, welche aus der Oberfläche einer ersten Halbleiterschicht (52, 102) innerhalb eines Substrats vom Typ Halbleiter-auf-Isolator heraussteht, das aus der auf einer Isolatorschicht (51) befindlichen ersten Halbleiterschicht (52), aus dieser Isolatorschicht (51) und aus einer unter der Isolatorschicht (51) befindlichen zweiten Halbleiterschicht (50) besteht, wobei das Substrat vom Typ Halbleiter-auf-Isolator aus einem Ausgangssubstrat, das eine Oberfläche aufweist, die eine horizontale Bezugsebene definiert, ausgebildet ist,
- wobei der Mikro-Wellenleiter (520, 720, 820, 920, 1020, 1620) einen aktiven Bereich (529, 729, 829, 929, 1029) umfasst, der geeignet ist, die Ausbreitung einer optischen Mode, welche aus der Einspeisung des optischen Signals in den aktiven Bereich resultiert, zu lenken, wobei dieser aktive Bereich um die optische Mode (529, 729, 829, 929, 1029) zentriert ist oder sie umgibt und zwischen einem dotierten Bereich vom P-Typ (522, 722, 922, 1022, 1122, 1622) und einem dotierten Bereich vom N-Typ (526, 726, 926, 1026, 1126, 1626), sogenannten dotierten Hauptbereichen, die zwischen sich eine Diode (530, 630, 730, 830, 930, 1030, 1130, 1630) bilden, gelegen ist, wobei die Hauptbereiche jeweils eine Dicke und eine horizontale Abmessung aufweisen,
- wobei die dotierten Hauptbereiche (522, 722, 922, 1022, 1622, 526, 726, 926, 1026, 1126, 1626) P oder N mit zwei Elektroden verbunden sind, die auf beiden Seiten des aktiven Bereichs (529), seitlich in einer Ebene parallel zu der horizontalen Bezugsebene oder vertikal zu der horizontalen Bezugsebene angeordnet sind (531, 931, 1031, 1131, 1631, 536, 936, 1036, 1136, 1636), und ermöglichen, die Diode (530, 630, 730, 830, 930, 1030, 1130, 1630) zu polarisieren,
**dadurch gekennzeichnet, dass** die Komponente eine Grenzfrequenz aufweist, die dadurch erhalten wird, dass das Substrat vom Typ Halbleiter-auf-Isolator so ausgebildet wird,
- dass :
• die Isolatorschicht eine Dicke von wenigstens 2 Mikrometern aufweist oder
• die Isolatorschicht (51, 161, 163) in wenigstens einem Teil des Bereichs (139, 169, 168), der senkrecht unter der Diode (530, 630, 730, 830, 930, 1030, 1130, 1630) gelegen ist, teilweise oder vollständig verjüngt oder entfernt ist,
- und/oder so, dass die auf der Isolatorschicht (51) gelegene erste Halbleiterschicht (52):
• aus einem Halbleiter mit einem spezifischen Widerstand von über 100 Ohm.cm ausgebildet ist, oder
- die unter der Isolatorschicht gelegene zweite Halbleiterschicht (50) in dem senkrecht unter der Diode gelegenen Bereich entfernt oder verjüngt ist oder aus einem Halbleiter mit einem spezifischen Widerstand von über 100 Ohm.cm ausgebildet ist.

2. Komponente nach dem vorhergehenden Anspruch, wobei wenigstens einer der dotierten Hauptbereiche (522, 526, 1126) eine Vergrößerung seiner Abmessung (t522, t1126) quer zum Strom (i522, i1126) aufweist, die durch eine Überdicke (h522) in Kombination mit einer Vergrößerung seiner horizontalen Abmessung (5221, d1126) in seinem mit seiner Elektrode (531, 1136) verbundenen Teil (5221, 11261) gegenüber seinem dem aktiven Bereich (529, 1129) am nächsten gelegenen Teil (5220, 11260) erreicht wird.

3. Komponente nach dem vorhergehenden Anspruch, wobei die beiden dotierten Hauptbereiche (522, 526) eine Überdicke (h522, h526) in ihrem mit ihrer jeweiligen Elektrode verbundenen Teil gegenüber ihrem dem aktiven Bereich (529) am nächsten gelegenen Teil aufweisen, wobei die Überdicke mit einer Metallschicht (531, 536), die den unteren Teil der Elektrode bildet, überzogen ist.

4. Komponente nach einem der vorhergehenden Ansprüche, wobei:
- die dotierten Hauptbereiche (522, 526, 1022, 1026) durch einen nicht absichtlich dotierten Bereich eines Halbleiters, sogenannten intrinsischen Bereich (521) getrennt sind, wobei die Diode (530, 630, 930, 1030, 1630), die zwischen ihnen gebildet ist, vom PIN-Typ ist, wobei die dotierten Bereiche auf beiden Seiten der Mitte des aktiven Bereichs, bezogen auf die horizontale Bezugsebene, gelegen sein können, so dass die Diode vom vertikalen Typ ist, oder auf beiden Seiten der Mitte bezogen auf eine zu der Bezugsebene normale Ebene, so dass die Diode vom seitlichen Typ ist, wobei der intrinsische Bereich wenigstens eine dotierte horizontale ebene Schicht, sogenannte dotierte Ebene (524, 1024, 1624) umfassen kann; oder
- die dotierten Hauptbereiche (722, 1122, 726, 1126) in einem sogenannten Übergangsbereich in Kontakt miteinander sind und zusammen eine Diode (730, 830, 1130) vom PN-Typ bilden.

5. Komponente nach dem vorhergehenden Anspruch, wobei die Diode vom PIN-Typ mit einer einzigen dotierten Ebene (524, 1024) ist.

6. Herstellungsverfahren, das Schritte umfasst, die so ausgewählt, definiert und kombiniert sind, dass eine Komponente nach einem der Ansprüche 1 bis 5 ausgebildet wird.

7. Verfahren nach dem vorhergehenden Anspruch, umfassend einen Schritt zur Verwendung eines Halbleitersubstrats (50, 100, 160, 164) mit einem spezifischen Widerstand von über 100 Ohm.cm.

8. Verfahren nach einem der Ansprüche 6 bis 7, umfassend einen Schritt zur Verwendung eines Halbleitersubstrats (50, 100, 160, 164) mit einem spezifischen Widerstand von über 200 Ohm.cm.

9. Verfahren nach Anspruch 6 bis 8, umfassend wenigstens einen Schritt zum Integrieren der Komponente in eine komplexe oder kompakte oder Hybrid-Schaltung durch ein Verfahren vom Typ "3D-Integration", das entweder ein Überziehen der Komponente mit einer oder mehreren Schichten, die wenigstens eine Komponente mit einer anderen Funktion bilden, oder ein Verbinden mit einer oder mehreren Schichten, die wenigstens eine Komponente mit einer anderen Funktion bilden, oder eine Kombination aus beiden umfasst.

10. Vorrichtung (3, 16, 18, 198) zur Steuerung eines optischen Signals anhand eines elektrischen Signals, wobei die Vorrichtung wenigstens eine optoelektronische Komponente nach einem der Ansprüche 1 bis 5 umfasst.

11. Vorrichtung nach dem vorhergehenden Anspruch, wobei die optoelektronische Komponente als ein Phasenmodulator aufgebaut ist, der geeignet ist, eine Phasenmodulation des optischen Signals, das an einem Ende des Mikro-Wellenleiters der Komponente eingespeist wird, durch Anlegen des elektrischen Signals an die Elektroden der Diode der Komponente durchzuführen.

12. Vorrichtung nach einem der Ansprüche 9 bis 10, wobei wenigstens eine optoelektronische Komponente als ein Intensitätsmodulator aufgebaut ist, der geeignet ist, eine Intensitätsmodulation des optischen Signals (31) durchzuführen.

13. Vorrichtung nach einem der Ansprüche 10 bis 12, wobei wenigstens eine optoelektronische Komponente als ein Phasenmodulator aufgebaut ist, der geeignet ist, eine Phasenmodulation in einem optischen Signal (31) durchzuführen, wobei die Komponente innerhalb einer interferometrischen Vorrichtung (3) vom Typ Mach-Zehnder oder eines Fabry-Perot-Resonators oder eines Ringresonators angeordnet ist, wobei ein(e) jede(r) dieser letzteren dazu ausgelegt ist, die Phasenmodulation in eine Intensitätsmodulation des optischen Signals umzuwandeln.

## Claims

1. Optoelectronic component for controlling an optical signal (311) travelling in a micro-waveguide, the optoelectronic component comprising said micro-waveguide which is formed using a ridge or a rib (520) sticking out from the surface of a first semiconductor layer (52, 102) within a semiconductor on insulator type substrate realized by said first semiconductor layer (52) located on an insulating layer (51), by this insulating layer (51) and by a second semiconductor layer (50) located under the insulating layer (51), the semiconductor on insulator type substrate being produced from an original substrate with a surface that defines an horizontal reference plan,
- said micro-waveguide (520, 720, 820, 920, 1020, 1620) comprising an active area (529, 729, 829, 929, 1029) able to guide the propagation of an optical mode caused by injecting said optical signal into the active area, this active area being centered on or surrounding the optical mode (529) and located between a P type doped area (522, 722, 922, 1022, 1122, 1622) and an N type doped area (526, 726, 926, 1026, 1126, 1626), called main doped areas, forming a diode (530, 630, 730, 830, 930, 1030, 1130) between them,
- said P or N main doped areas (522, 722, 922, 1022, 1622, 526, 726, 926, 1026, 1126, 1626) being connected to two electrodes (531, 931, 1031, 1131, 1631, 536, 936, 1036, 1136, 1636) arranged on either side of said active area (529), laterally in a plan parallel to or vertically according to said horizontal reference plan, and making it possible to polarize said diode (530, 630, 730, 830, 930, 1030, 1130, 1630), **characterized in that** the component shows a cut-off frequency obtained by producing the semiconductor on insulator type substrate :
- such that:
∘ the insulator layer has a thickness of at least 2 micrometers, or
∘ the insulator layer (51, 161, 163) is thinned or taken away, partially or completely, in at least one part of the area (139, 169, 168) located plumb with the diode (530, 630, 730, 830, 930, 1030, 1130, 1630).
- and/or such that the first semiconductor layer (52) located on the insulator layer (51):
o is produced from a semiconductor with a resistivity greater than 100 ohms.cm, or
- the second semiconductor layer (50) located under the insulator layer is thinned or taken away in the area located plumb with the diode or is produced from a semiconductor with a resistivity greater than 100 ohms.cm.

2. Component according to the previous claim, wherein at least one of said main doped areas (522, 526, 1126) shows an increase in its dimension (t522, t1126) transverse to the current (i522, i1126), obtained by an extra thickness (h522) combined with an increase in its horizontal dimension (d1126) in the part of it (5221, 11261) connected to its electrode (531, 1136) in relation to the part of it (5220, 11260) closest to said active area (529, 1129).

3. Component according to the previous claim, wherein the two main doped areas (522, 526) have an extra thickness (h522, h526) in the part of them connected to their respective electrode in relation to the part of them closest to the active area (529), said extra thickness being covered by a metallic layer (531, 536) forming the lower part of said electrode.

4. Component according to any one of the previous claims, wherein:
- the main doped areas (522, 526, 1022, 1026) are separated by an area of a semiconductor not intentionally doped, called intrinsic area (521), said diode (530, 630, 930, 1030, 1630) formed between them being of PIN type, said doped areas being possibly located on either sides of the center of the active area in relation to the horizontal reference plan, so that the diode is of a vertical type, or on either sides of said center in relation to a plan perpendicular to said reference plan, so that the diode is of a lateral type, intrinsic area possibly comprising at least one horizontal plane doped layer called doped plane (524, 1024, 1624); or
- the main doped areas (722, 1122, 726, 1126) are in contact with each other within an area, called junction area, and form together a diode (730, 830, 1130) of PN type.

5. Component according to the previous of claim, **characterized in that** the diode is of PIN type with a single doped plane (524, 1024).

6. Manufacturing process comprising steps that are selected, defined and combined in order to produce a component according to any one of claims 1 to 5.

7. Process according to the previous claim, **characterized in that** it comprises a step of using of a semiconductor substrate (50, 100, 160, 164) with a resistivity above 100 ohms.m.

8. Process according any one of claims 6 to 7, **characterized in that** it comprises a step of using of a semiconductor substrate (50, 100, 160, 164) with a resistivity above 200 ohms.m.

9. Process according to claim 6 to 8, comprising at least one integration of the component in a complex or compact or hybrid circuit by a process of the "three-dimensional integration" type, that comprises
either covering said component by one or more layers forming at least one component with a different function,
or an assembly with one or more layers forming at least one component with a different function,
or a combination of the two.

10. Device (3, 16, 18, 198) for controlling an optical signal from an electrical signal, the device comprising at least one optoelectronic component according to any one of claims 1 to 5.

11. Device according to the previous claim, **characterized in that** the optoelectronic component is arranged as a phase modulator able to produce a phase modulation of said optical signal injected at one end of the micro-waveguide of said component, by applying the electrical signal to the electrodes of the diode of said component.

12. Device according to any one of claims 9 to 10, wherein at least one optoelectronic component is arranged as an intensity modulator able to produce an intensity modulation of said optical signal (31).

13. Device according to any one of claims 10 to 12, wherein at least one optoelectronic component is arranged as a phase modulator able to produce a phase modulation in an optical signal (31), said component being arranged within a Mach-Zehnder type interferometric device (3), or a Fabry-Perot resonator or a ring resonator, each of the latest being set up to convert said phase modulation into an intensity modulation of said optical signal.
